# DEMANDE DE BREVET EUROPEEN

(11) **EP 2 002 953 A2**
(43) Date de publication de la demande: **17.12.2008**
(21) Numéro de dépôt: 08352011.4
(22) Date de dépôt: 05.06.2008
(51) Int. Cl.: B29C 33/38, B21D 22/02, B21D 37/01, C04B 28/00

(54) **Outillage utilisé lors d'un procédé de formage superplastique**

(30) Priorité: 07.06.2007 FR 0704066
(71) Demandeur: ARMINES, F-75006 Paris (FR)
(72) Inventeur: Cutard, Thierry, 81000 Albi (FR); Nazaret, Fabien, 81000 Albi (FR); Bernhart, Gérard, 31500 Toulose (FR)
(74) Mandataire: Santarelli

(57) **Abrégé**

Cet outil est réalisé dans un béton réfractaire résistant à des températures supérieures à 500 °C, comportant des agrégats liés à l'aide d'un liant hydraulique et renforcé de fibres métalliques.

## Description

La présente invention concerne un outillage utilisé lors d'un procédé de formage superplastique.

Il est connu notamment dans le domaine aéronautique, mais aussi dans le domaine automobile, du génie civil, ferroviaire, etc., de réaliser certaines pièces métalliques avec un procédé de formage superplastique. Ce procédé est basé sur la capacité de certains alliages, par exemple de titane, à supporter une déformation importante. Ces alliages, appelés par la suite alliages superplastiques, peuvent atteindre des allongements allant parfois au-delà de 1000% sous certaines conditions de température, de pression et de déformation alors que les alliages classiques se déforment généralement uniquement de l'ordre de 20%.

Pour réaliser une pièce avec un alliage superplastique, un procédé de formage connu de l'homme du métier prévoit qu'une tôle est pincée entre une cuve et un couvercle. Cet ensemble est maintenu étanche par pression mécanique. En exerçant alors une pression, par mise sous pression d'un espace se trouvant entre le couvercle et la tôle, la tôle se déforme pour venir épouser une forme réalisée dans la cuve. La pression et la température (de l'ordre de 900°C pour des alliages de titane) doivent être parfaitement maîtrisées lors du procédé de formage.

Comme on peut le constater, les outils de formage sont soumis à de fortes contraintes lors de la mise en oeuvre du procédé de formage superplastique. Ces outils sont réalisés dans des matériaux réfractaires, tels par exemple des alliages métalliques réfractaires ou bien des bétons géopolymères réfractaires ou bien encore des céramiques monolithiques.

Les alliages métalliques réfractaires présentent plusieurs inconvénients. Tout d'abord ils sont très lourds. Leur prix de revient est également élevé. Les outils réalisés dans de tels alliages demandent également un long délai de réalisation. Lors de l'utilisation des outils métalliques, on remarque que ceux-ci s'oxydent et présentent une tendance à l'écaillage et à la fissuration.

Les bétons géopolymères et les céramiques monolithiques résolvent certains de ces problèmes. Ils sont moins lourds et permettent de réaliser un outil plus rapidement. Toutefois, ils ont un prix de revient qui reste élevé et, comme les alliages métalliques, ils présentent un fluage à haute température.

Pour les bétons géopolymères, des problèmes de compatibilité physico-chimique avec les alliages formés dans l'outil peuvent se présenter et conduire à des problèmes de collage de la pièce formée avec l'outil. Ces bétons sont également difficiles à mettre en oeuvre. Ils utilisent des précurseurs très corrosifs et peu de matériaux peuvent être utilisés pour les moules dans lesquels ces bétons sont coulés.

Enfin, un problème important pour les bétons géopolymères est le risque de rupture de ceux-ci lors de la mise en oeuvre du procédé de formage superplastique. L'outil en béton géopolymère est alors soumis à des contraintes importantes qui peuvent conduire à la rupture de l'outil.

La présente invention a alors pour but de fournir un matériau pour la réalisation d'outillages utilisés pour le formage superplastique de pièces qui présente un prix de revient inférieur aux matériaux connus utilisés tout en assurant une bonne résistance à la rupture et aussi une grande stabilité à hautes températures (au-delà de 500 °C).

À cet effet, elle propose un outil pour la mise en oeuvre d'un procédé de formage superplastique, caractérisé en ce qu'il est réalisé dans un béton réfractaire résistant à des températures supérieures à 500 °C, comportant des agrégats liés à l'aide d'un liant hydraulique et renforcé de fibres métalliques.

Un tel outil présente une bonne résistance aux chocs thermiques et avec une contrainte maximale de rupture augmentée par rapport aux outillages de l'art antérieur en béton géopolymère. Par rapport aux outils connus, en alliage métallique ou en béton géopolymère, un outil selon l'invention présente un prix de revient sensiblement inférieur. Il permet de travailler aux hautes températures qui sont utilisées lors d'un formage superplastique : par exemple de l'ordre de 500 °C pour le formage d'alliages à base d'aluminium et de l'ordre de 900 °C pour les alliages à base de titane.

Dans un tel outil, les agrégats utilisés sont par exemple choisis dans l'ensemble comportant la bauxite, la mullite, l'andalousite, la chamotte, l'alumine tabulaire, le carbure de silicium et/ou le corindon.

Le béton utilisé peut également être un béton à base de carbure, de carbone ou de graphite.

Dans une forme de réalisation préférée de l'invention, les agrégats présentent une taille comprise entre 1 et 20 mm.

Dans un outil selon l'invention, le liant utilisé peut être un ciment réfractaire à haute teneur en alumine. On considère par exemple ici des ciments comportant de préférence une teneur en alumine supérieure à 65%. La teneur en poids de ciment, par rapport au poids total de l'outil, est quant à elle de préférence inférieure à 10%. On peut ainsi envisager ici d'avoir un béton réfractaire à liant hydraulique à basse teneur en ciment (entre 2 et 10% de ciment), voire même un béton réfractaire à liant hydraulique à ultra basse teneur en ciment (inférieure à 2%).

La composition chimique globale du béton réfractaire utilisé pour la réalisation d'un outil selon la présente invention, sans les fibres métalliques, est avantageusement telle qu'elle comporte :
- entre 83 et 87% d'alumine,
- entre 9 et 11% de silice,
- entre 0,9 et 1,3% de chaux,
- entre 0,8 et 1,2% d'oxyde de fer, et
- entre 1 et 5% de composants minoritaires divers,
la somme des composants de la composition n'excédant pas 100%.

Une forme de réalisation préférée prévoit que cette composition est la suivante : 85% d'alumine, 10% de silice, 1,1% de chaux, 1% d'oxyde de fer et 2,9% de composants minoritaires divers.

Pour améliorer les performances de l'outil, le béton réfractaire à liant hydraulique peut contenir en outre comme additif des fibres polymères.

Dans un tel outil de formage superplastique, les fibres utilisées sont de préférence des fibres en acier inoxydable. Ces fibres peuvent aussi être réalisées dans un alliage connu sous la marque déposée Inconel ou bien encore dans un alliage de type FeCrAl à base de fer, chrome et aluminium. Celles-ci permettent un bon renfort du béton réfractaire à liant hydraulique tout au long de la vie de l'outil. Pour un meilleur renfort du béton, les fibres sont choisies de préférence dans l'ensemble des fibres droites avec crochet, des fibres plates et/ou des fibres en forme de gouttière. Leur longueur est par exemple comprise entre 5 et 100 mm tandis que leur diamètre est avantageusement inférieur à 2 mm afin de ne pas risquer d'endommager le béton réfractaire à liant hydraulique au moment de sa cuisson ou lors de son utilisation à haute température. La fraction volumique des fibres dans le béton réfractaire à liant hydraulique est par exemple comprise entre 0,2 et 3%.

La présente invention concerne également une utilisation d'un béton réfractaire résistant à des températures supérieures à 500 °C, comportant des agrégats liés à l'aide d'un liant hydraulique et renforcé de fibres métalliques pour la réalisation d'un outil pour la mise en oeuvre d'un procédé de formage superplastique, ainsi qu'un procédé de fabrication d'un outillage pour la mise en oeuvre d'un procédé de formage superplastique, caractérisé en ce qu'il comporte une étape de préparation puis de coulage d'un béton réfractaire résistant à des températures supérieures à 500 °C, comportant des agrégats liés à l'aide d'un liant hydraulique et renforcé de fibres métalliques. La présente invention sera mieux comprise à l'aide de la description qui suit, décrivant un mode de réalisation préféré et des variantes.

La description ci-dessous concerne la réalisation d'un outillage pour la mise en oeuvre d'un procédé de formage superplastique. De façon originale, cet outillage est réalisé dans un béton réfractaire à liant hydraulique renforcé de fibres métalliques.

Le béton réfractaire utilisé pour la réalisation de cet outillage est un béton réfractaire à base d'oxydes du système silice-alumine. Il peut également s'agir d'un béton réfractaire à base de carbure, ou bien à base de carbone ou bien à base de graphite. Ce béton réfractaire à liant hydraulique est constitué d'agrégats, d'additifs, d'un système de liaison et de porosités. Ce béton est prévu pour travailler à des températures élevées telles celles que l'on utilise pour la réalisation de formages superplastiques. Un tel béton réfractaire supporte des températures d'au moins 500 °C sans se désagréger et en restant stable.

Dans une forme de réalisation préférée, les agrégats sont des oxydes sous forme cristallisée ou amorphe. Ils constituent de préférence plus de 70% en poids (par rapport au poids final du béton) de la composition du béton. Les agrégats peuvent être notamment de la bauxite, de la mullite, de l'andalousite, de la chamotte, de l'alumine tabulaire, du carbure de silicium ou du corindon. Il peut également s'agir d'un mélange de deux ou plusieurs de ces matériaux. La taille maximale des agrégats est par exemple comprise entre 1 et 20 mm.

Comme déjà mentionné plus haut, la liaison du béton utilisé pour un outillage selon l'invention est de type hydraulique. Cette liaison est assurée par l'hydratation d'un ciment réfractaire à haute teneur en alumine (supérieure à 65%) mélangé aux agrégats.

Le béton réfractaire à liant hydraulique réalisé pour la fabrication d'un outillage selon l'invention a de préférence une basse teneur en ciment (de 2 à 10% du poids total du béton fini). Il peut également être envisagé d'avoir un béton réfractaire à liant hydraulique avec une ultra basse teneur en ciment (inférieure à 2%).

De manière connue, des additifs peuvent également être rajoutés dans la composition du béton. Il peut s'agir d'additifs tels des solvants, des liants (autres que les ciments), des plastifiants ou des lubrifiants organiques. L'ajout d'additifs de ce type permet notamment d'améliorer le comportement rhéologique du béton réfractaire à liant hydraulique lors de l'étape de malaxage et de l'étape de coulage évoquées plus loin. A titre d'exemple illustratif et non limitatif, un additif commercialisé sous la marque Darvan 7 peut être utilisé ici.

Des fibres polymères peuvent également être ajoutées pour faciliter l'évacuation des différentes formes d'eau contenues dans le matériau durant les étapes de séchage et de cuisson évoquées ci-après.

L'outillage de formage superplastique selon l'invention est renforcé de fibres métalliques à introduire dans le béton réfractaire à liant hydraulique. Ces fibres sont de préférence en acier inoxydable. Il peut s'agir d'un acier comportant au moins 12,5% de chrome (Cr), éventuellement du nickel (Ni), par exemple de 8 à 15 %. Il peut aussi contenir du molybdène (Mo) dans des proportions allant de 0,2 à 2,5%. L'acier pour réaliser ces fibres est ainsi par exemple un acier présentant une nuance choisie dans l'ensemble comprenant les nuances 430, 446, 304, 310, 330, 316, 316L et 321 de la norme AISI (pour American Iron and Steel Institute, soit institut américain du fer et de l'acier). Il peut également s'agir de fibres réalisées dans un alliage complexe à base de nickel, de chrome et de fer tel que par exemple l'alliage connu sous la marque déposée Inconel. Un alliage complexe de type FeCrAl (pour fer-chrome-aluminium) peut aussi être envisagé ici.

Les fibres utilisées peuvent être mises en forme à partir de fil d'acier tréfilé ou bien par extraction de l'alliage liquide. Leur forme peut être droite avec crochet, plates ou encore en forme de gouttière. Éventuellement, ces fibres peuvent aussi être droites mais plus la forme est complexe, plus leur apport sur les performances du béton réfractaire à liant hydraulique renforcé est important. La longueur de ces fibres peut aller par exemple de 5 mm à 100 mm. Leur diamètre ne dépasse pas de préférence 2 mm. Au-delà, les fibres risquent d'endommager le béton réfractaire à liant hydraulique au moment de la cuisson ou lors de l'utilisation de l'outil à haute température. La fraction volumique de fibres à ajouter est par exemple comprise entre 0,2% et 3%.

A titre d'exemple illustratif (et non limitatif), une composition d'un béton réfractaire à liant hydraulique pour la réalisation d'un outil selon l'invention est donnée ci-après.

Ce béton est un béton à base de bauxite et à ultra-basse teneur en ciment (<2%). Ce ciment est à très haute teneur en alumine, par exemple comme la nuance commerciale SECAR71 à 71% d'alumine.

En plus du ciment et des granulats de bauxite, ce béton réfractaire à liant hydraulique contient aussi de la bauxite fine, de la fumée de silice amorphe, du corindon, de l'alumine alpha, des ultrafines, des adjuvants et des fibres polymères. Sa composition chimique globale est sensiblement la suivante : 85% d'alumine, 10% de silice, 1,1% de chaux, 1% d'oxyde de fer et 2,9% de composants minoritaires divers.

Dans ce béton réfractaire à liant hydraulique tel que décrit au paragraphe précédent, il est rajouté une fraction volumique de 1,5% de fibres droites avec crochets d'une longueur de 25 mm, d'un diamètre de 0,38 mm et de nuance métallurgique AISI310. Il s'agit d'une nuance d'acier inoxydable.

Pour réaliser un tel outillage, le béton réfractaire à liant hydraulique utilisé est avantageusement coulable et vibrable ou autoplaçant ou bien autocoulable.

Un béton réfractaire à liant hydraulique mis en forme par vibration est préférable pour obtenir des états de surface compatibles avec le procédé de formage superplastique. Le mélange sec de béton réfractaire est dans ce cas malaxé avant ajout d'une quantité d'eau correspondant à la nuance de béton réfractaire utilisée. Une fois que le mélange est homogène, les fibres métalliques sont ajoutées et l'ensemble est encore malaxé quelques instants. Le tout est alors coulé dans un coffrage dans lequel se trouve l'empreinte de la contre-forme de l'outillage à obtenir. L'ensemble est vibré si la rhéologie du béton le nécessite.

Des inserts métalliques peuvent être déposés dans le coffrage si l'outillage nécessite d'avoir des évents ou des points de manutention notamment. Ces inserts seront retirés au cours de la prise. Après le séchage, le béton réfractaire à liant hydraulique renforcé peut être cuit à une température égale ou supérieure à la température d'utilisation de l'outillage. Il peut également être envisagé de réaliser la cuisson de l'outil lors de sa première utilisation. Le dimensionnement de l'outillage doit prendre en compte le retrait lié à la cuisson du béton réfractaire à liant hydraulique renforcé et le différentiel de dilatation entre le béton fibré cuit et l'alliage superplastique mis en forme.

Pour mettre en oeuvre le procédé de formage, l'outillage réalisé (qui peut également être appelé « insert ») est placé dans une cuve métallique sur laquelle sont appliqués les efforts de fermeture de la presse de formage superplastique. La cuve, au lieu d'être métallique, peut aussi être réalisée dans un béton réfractaire à liant hydraulique tel que décrit plus haut pour la réalisation de l'insert.

L'outillage en béton réfractaire à liant hydraulique est une bonne solution de substitution aux outillages en alliage réfractaire qui sont habituellement utilisés pour le formage superplastique des tôles d'alliages de titane aux environs de 900°C. Les bétons réfractaires à liant hydraulique renforcés tels que décrits plus haut conservent de bonnes propriétés mécaniques jusqu'aux environs de 1000°C. Ces bétons réfractaires à liant hydraulique renforcés résistent bien aux chocs thermiques que subissent les outillages dans ce procédé de mise en forme grâce à un coefficient de dilatation et un module d'Young plus faibles que pour les alliages métalliques. L'ajout des fibres améliorent encore cette propriété. En effet, elles permettent de limiter l'amorçage et surtout la propagation catastrophique des fissures. Elles améliorent également les propriétés mécaniques du béton réfractaire à liant hydraulique. En effet, les fibres permettent de ponter la fissure ou les fissures et de différer la propagation catastrophique de fissures. Ainsi, la durée de vie du béton réfractaire à liant hydraulique est rallongée car l'outillage peut continuer de travailler malgré la présence de fissures. Ceci est primordial dans un environnement industriel. L'outillage ne peut pas subir une rupture catastrophique qui pourrait s'avérer dangereuse.

L'utilisation de béton réfractaire à liant hydraulique pour la réalisation de l'outillage selon l'invention permet aussi de réduire la masse volumique de l'outillage par rapport à l'utilisation d'alliages métalliques. De plus, les délais de fabrication sont sensiblement plus courts avec du béton réfractaire à liant hydraulique qu'avec des alliages métalliques et les prix de revient sont plus faibles car les matières premières sont meilleur marché.

Par rapport à des bétons géopolymères, la solution proposée ici permet d'obtenir des outils moins fragiles avec une contrainte à la rupture bien meilleure. Les risques d'éclatement de l'outil sont bien plus limités. Le béton réfractaire à liant hydraulique renforcé a aussi une bonne compatibilité physico-chimique avec les alliages de titane (pas de collage).

Bien entendu, la présente invention ne se limite pas aux formes de réalisation décrites ci-dessus à titre d'exemples non limitatifs. Elle concerne également toutes les variantes de réalisation à la portée de l'homme du métier dans le cadre des revendications ci-après.

## Revendications

1. Outil pour la mise en oeuvre d'un procédé de formage superplastique, **caractérisé en ce qu'**il est réalisé dans un béton réfractaire résistant à des températures supérieures à 500 °C, comportant des agrégats liés à l'aide d'un liant hydraulique et renforcé de fibres métalliques.

2. Outil selon la revendication 1, **caractérisé en ce que** les agrégats utilisés sont choisis dans l'ensemble comportant la bauxite, la mullite, l'andalousite, la chamotte, l'alumine tabulaire, le carbure de silicium et/ou le corindon.

3. Outil selon la revendication 1, **caractérisé en ce que** le béton utilisé est choisi dans l'ensemble comprenant les bétons à base de carbures, les bétons à base de carbone et les bétons à base de graphite.

4. Outil selon l'une des revendications 1 à 3, **caractérisé en ce que** les agrégats présentent une taille comprise entre 1 et 20 mm.

5. Outil selon l'une des revendications 1 à 4, **caractérisé en ce que** le liant utilisé est un ciment réfractaire à haute teneur en alumine, et **en ce que** sa teneur en poids, par rapport au poids total de l'outil, est inférieure à 10%.

6. Outil selon l'une des revendications 1 à 5, **caractérisé en ce que** la composition chimique globale du béton réfractaire, sans les fibres métalliques, comporte :
- entre 83 et 87% d'alumine,
- entre 9 et 11% de silice,
- entre 0,9 et 1,3% de chaux,
- entre 0,8 et 1,2% d'oxyde de fer, et
- entre 1 et 5% de composants minoritaires divers,
la somme des composants de la composition n'excédant pas 100%.

7. Outil selon la revendication 6, **caractérisé en ce que** la composition chimique globale du béton réfractaire, sans les fibres métalliques, est la suivante : 85% d'alumine, 10% de silice, 1,1% de chaux, 1% d'oxyde de fer et 2,9% de composants minoritaires divers.

8. Outil selon l'une des revendications 1 à 7, **caractérisé en ce que** le béton réfractaire à liant hydraulique contient en outre comme additif des fibres polymères.

9. Outil selon l'une des revendications 1 à 8, **caractérisé en ce que** les fibres métalliques utilisées sont des fibres réalisées dans un matériau choisi dans l'ensemble des matériaux contenant les aciers inoxydables, alliages complexes de nickel, de chrome et de fer et les alliages de fer, de chrome et d'aluminium.

10. Outil selon la revendication 9, **caractérisé en ce que** les fibres sont choisies dans l'ensemble des fibres droites avec crochet, des fibres plates et/ou des fibres en forme de gouttière.

11. Outil selon l'une des revendications 1 à 9, **caractérisé en ce que** les fibres présentent une longueur comprise entre 5 et 100 mm et un diamètre inférieur à 2 mm.

12. Outil selon l'une des revendications 1 à 10, **caractérisé en ce que** la fraction volumique des fibres dans le béton réfractaire à liant hydraulique est comprise entre 0,2 et 3%.

13. Utilisation d'un béton réfractaire résistant à des températures supérieures à 500 °C, comportant des agrégats liés à l'aide d'un liant hydraulique et renforcé de fibres métalliques pour la réalisation d'un outil pour la mise en oeuvre d'un procédé de formage superplastique.

14. Procédé de fabrication d'un outillage pour la mise en oeuvre d'un procédé de formage superplastique, **caractérisé en ce qu'**il comporte une étape de préparation puis de coulage d'un béton réfractaire résistant à des températures supérieures à 500 °C, comportant des agrégats liés à l'aide d'un liant hydraulique et renforcé de fibres métalliques.
